# EUROPÄISCHE PATENTSCHRIFT

(11) **EP 1 055 645 B1**
(45) Veröffentlichungstag und Bekanntmachung des Hinweises auf die Patenterteilung: **02.07.2008**
(21) Anmeldenummer: 00106594.5
(22) Anmeldetag: 28.03.2000
(51) Int. Cl.: C03B 5/20, C03B 5/225, C03B 5/03, C03B 5/185

(54) **Verfahren zum Läutern von Glas**
Method for refining glass
Procédé d'affinage de verre

(30) Priorität: 28.05.1999 DE 19924521
(43) Veröffentlichungstag der Anmeldung: 29.11.2000
(73) Patentinhaber: Schott AG, 55122 Mainz (DE)
(72) Erfinder: Hoyer, Patrick, Dr., 82194 Gröbenzell (DE); Drechsler, Alfred, 64351 Weiterstadt (DE); Elzner, Peter, 65391 Lorch (DE); Lentes, Frank-Thomas, Dr., 55411 Bingen (DE)

(56) Entgegenhaltungen:
- EP-A- 0 133 409
- EP-A- 0 304 371
- EP-A- 0 393 882
- EP-A- 0 403 183
- FR-A- 2 558 821
- GB-A- 835 201
- GB-A- 2 204 310
- US-A- 4 110 098
- US-A- 4 424 071
- US-A- 4 819 247
- SOVIET INVENTIONS ILLUSTRATED Section Ch, Week 29, 29. August 1984 (1984-08-29) Derwent Publications Ltd., London, GB; Class L01, AN 84-180564 XP002163798 & SU 0 992 432 A (AS LATV PHYS INST), 30. Januar 1983 (1983-01-30)

## Beschreibung

Die Erfindung betrifft ein Verfahren zum Schmelzen von Glas. Eine bevorzugte Anwendung ist die Läuterung von Glasschmelzen.

Glasschmelzwannen sind seit langem bekannt, insbesondere Glasschmelzwannen, die kontinuierlich betrieben werden können, waren Vorbedingung für das Entstehen großer Unternehmen der Glasbranche mit industrieller Massenfertigung.

Dabei unterscheiden sich die Wannen besonders nach ihrer Konstruktionsart, ihrer Größe und ihrem Beheizungssystem.

Das Beheizen von Glasschmelzwannen durch direkte elektrische Widerstandsheizung, d. h. durch Hindurchleiten eines elektrischen Stroms durch die Glasschmelze mittels eingetauchter Elektroden, ist ein Verfahren, das sich immer mehr durchsetzt, da hohe wärmetechnische Wirkungsgrade erreicht werden. Sowohl das vollelektrische Beheizen als auch die Elektrozusatzheizung ist anzutreffen.

Übliche Materialien für solche Elektroden sind Molybdän (Mo), Wolfram (W), Platin (Pt) und auch Zinnoxid (SnO₂).

Bei Glasschmelzen unter oxidierenden Bedingungen oder bei Schmelzen, die Substanzen enthalten, die leicht reduziert werden, also beispielsweise bei bleihaltigen oder arsen- oder antimonhaltigen Gläsern, ist die Korrosion des Elektrodenmaterials, insbesondere von Molybdän, besonders bei hohen Temperaturen der Glasschmelze in Kontakt mit den Elektroden ein großes Problem.

So ist beispielsweise aus der US-PS 4,819,247 eine Glassschmelzwanne mit einem elektrischen Beheizungssystem bekannt, wobei die Heizelektroden und die entsprechenden Gegenelektroden von gegenüberliegenden Seitenwänden in die Schmelze ragen.

Aus der EP 0 393 882 A2 ist ein Verfahren und eine Vorrichtung, speziell eine Läuterwanne zum Schmelzen von Glas bekannt. Die flach ausgebildete Läuterwanne ist elektrisch mittel Elektroden, die von den Seitenwänden in die Schmelze ragen, beheizbar, zusätzlich weist die Wanne Brenner oberhalb der Schmelze auf.

Aus der US-Patenschrift 4,424,071 geht eine Glasschmelzwanne hervor, die einen verengten Bereich zwischen dem Läuterbereich und dem Konditionierbereich der Wanne aufweist. Die Schmelze kann mittels Elektroden, die vor bzw. hinter dem verengten Bereich positioniert sind zusätzlich beheizt werden, um deren Fließfähigkeit zu gewährleisten. Eine Elektrode befindet sich dabei am Ende des heißen Läuterbereichs, die Gegenelektrode am Anfang des kälteren Konditionierbereiches.

Ein Verfahren, bei dem eine Glasschmelze durch einen verengten Bereich geführt, und darin durch Elektroden, die vor und hinter dem verengten Bereich angeordnet sind, mittels direkter elektrischer Beheizung beheizt wird, geht aus der Schrift GB-A-835 201 hervor.

Nach Beendigung der Rauhschmelze verbleiben neben großen Mengen gelöster Gase noch so viele Blasen in der Schmelze, daß das Glas unbrauchbar wäre. Es ist Aufgabe der Läuterung, die noch vorhandenen Blasen zu entfernen, die Konzentration gelöster Gase, die Anlass zum Nachgasen sein können, zu vermindern und die Schmelze zu homogenisieren. Hierzu bedient sich die Glastechnik thermischer, chemischer und mechanischer Hilfsmittel oder einer Kombination derselben.

Bei der thermischen Unterstützung der Läuterung steigert man die Temperatur der Schmelze so hoch wie möglich, um sowohl höhere Partialdrücke des Läutergases und dadurch eine Vergrößerung der Blasen, als auch durch Verminderung der Viskosität der Schmelze ein schnelleres Ausscheiden der Blasen aus der Schmelze zu erreichen.

Dem Wunsch nach einer höheren Temperatur der Schmelze, besonders im Läuterbereich der Wanne, steht jedoch die ohnehin schon problematische Korrosion der Heizelektroden bei den genannten elektrischen Beheizungssystemen entgegen. Mit steigender Temperatur der Schmelze ist eine zunehmende Elektrodenkorrosion zu beachten, da die Elektroden direkt in die heiße Schmelze ragen. Ebenfalls problematisch ist die mit zunehmender Temperatur der Schmelze zunehmende Wannenkorrosion.

Aufgabe der Erfindung ist es, ein Verfahren zum Schmelzen von Glas zu finden, bei dem durch direkte elektrische Beheizung der Schmelze eine möglichst hohe Temperatur der Schmelze, insbesondere im Läuterbereich der Glasschmelzwanne erzielt werden und die Korrosion sowohl der Heizelektroden als auch der Glasschmelzwanne gering gehalten werden kann.

Des weiteren soll das Verfahren einfach und mit niedrigen Investitionskosten durch geringe Modifikation bereits bestehender Wannen und Verfahren durchführbar sein.

Diese Aufgabe wird gemäß Patentanspruch 1 gelöst.

Beim erfindungsgemäßen Verfahren zum Schmelzen von Glas wird die Schmelze in eine Glasschmelzwanne mit wenigstens im Bereich der Schmelze verengten Querschnittsbereich geleitet, wobei der verengte Querschnittsbereich durch mindestens eine Heizelektrode vor und eine entsprechende Gegenheizelektrode hinter dem verengten Querschnittsbereich beheizt wird. Dadurch wird im verengten Querschnittsbereich eine Zone mit einer Temperatur der Schmelze gebildet, die höher ist, als die Temperaturen in den Bereichen der Heizelektrode und der Gegenelektrode, und die zum Läutern der Glasschmelze geeignet ist.

Dadurch, dass die Glasschmelzwanne wenigstens im Bereich der Schmelze einen verengten Querschnittsbereich aufweist und mindestens eine Heizelektrode zur direkten elektrischen Beheizung der Schmelze vor und eine entsprechende Heizelektrode hinter dem verengten Querschnittsbereich in die Schmelze ragt, ist es mit Vorteil möglich, sehr hohe Temperaturen der Schmelze innerhalb des verengten Querschnittsbereichs zu erzielen und gleichzeitig die Elektrodenkorrosion gering zu halten. Die Elektroden befinden sich im weniger heißen Bereich der Schmelze vor und hinter der Verengung.

Die Einbringung des Heizstroms über die Elektroden erfolgt in einem Bereich der Glasschmelzwanne, in dem bislang übliche Temperaturen der Schmelze auftreten, so dass die Elektrodenkorrosion nicht über das bislang bekannte Maß hinausgeht. Durch den verengten Querschnittsbereich der Wanne zwischen den Heizelektroden werden die Stromlinien zusammengezogen. Dadurch wird in diesem Bereich eine höhere Stromdichte und damit lokal getrennt vom Ort der Elektroden eine höhere Temperatur der Schmelze erzielt.

Die jeweilige Größe und Geometrie der Querschnittsverengung hat einen wesentlichen Einfluss auf die im verengten Querschnittsbereich erzielbare Temperatur.

Bei dem erfindungsgemäßen Verfahren in einer Glasschmelzwanne mit einem bestimmten verengten Querschnittsbereich ist die Temperatur der Schmelze im verengten Bereich im wesentlichen über die Elektroden einstell- und regelbar, wobei beispielsweise nach Art und Anzahl der Elektroden oder nach Art und Höhe der Betriebsspannung und des Stroms eine Temperatureinstellung und -regelung erfolgen kann.

So kann beispielsweise eine Temperatur der Schmelze im verengten Querschnittsbereich von bis zu 2000°C, insbesondere von bis zu 1800°C eingestellt werden. Dabei ist es beispielsweise durch alleinige Beheizung der Schmelze mittels Gasbrennern schwer möglich, die angegebenen hohen Temperaturen in einer Glasschmelzwanne homogen zu erreichen.

Bei Verwendung von Heizelektroden in einem Bereich der Schmelze, der die angegebenen Temperaturen aufweist, würde die Elektrodenkorrosion aufgrund der niedrigen Viskosität der Schmelze stark ansteigen.

Der verengte Querschnittsbereich wird bevorzugt durch eine Einwölbung der Seitenfläche oder durch eine Einwölbung von zwei gegenüberliegenden Seitenflächen der Glasschmelzwanne gebildet.

Bevorzugt ist die Querschnittsverengung der Wanne symmetrisch, insbesondere symmetrisch bezüglich der Längsachse der Glasschmelzwanne, ausgebildet.

Die Querschnittsverengung kann auch durch eine teilweise Verminderung der Wannentiefe, beispielsweise durch eine Einwölbung der Bodenfläche der Wanne, bewirkt werden.

Besonders vorteilhaft ist das Verfahren in einer Glasschmelzwanne bei der der verengte Querschnittsbereich sowohl durch symmetrische Einwölbung der gegenüberliegenden Seitenflächen als auch durch eine ausgeprägte Einwölbung der Bodenfläche gebildet wird.

Dabei hat es sich als besonders vorteilhaft erwiesen, wenn der verengte Querschnittsbereich bis zu 15 % der Gesamtlänge der Glasschmelzwanne beträgt. Vorzugsweise beträgt die Länge des verengten Querschnittsbereichs 150 bis 460 cm, dessen Breite 40 bis 150 cm und dessen Tiefe 10 bis 60 cm.

Um die bei hohen Temperaturen der Schmelze zunehmende Wannenkorrosion gering zu halten, wird die Wandung der Wanne wenigstens im verengten Querschnittsbereich gekühlt. Bevorzugt wird die Wandung dabei mittels einer Wasserkühlung gekühlt. Durch die Kühlung der Wandung wird auch die mit der Wandung direkt in Kontakt stehende Schmelze gekühlt und somit die Korrosion der Wandung gering gehalten. Die heiße, von der Wandung weiter entfernte Schmelze hat nur Kontakt mit der weniger heißen Schmelze nicht aber direkt mit der Wandung.

Die Glasschmelzwanne kann im verengten Querschnittsbereich zusätzlich mit Brennern, insbesondere Luft/Gas- und/oder Sauerstoff/Gasbrennern beheizt werden. Dadurch ergibt sich eine minimale Oberflächentemperatur der Schmelze von etwa 1680°C.

Die Bereiche der Glasschmelzwanne, die vor und/oder hinter dem verengten Querschnittsbereich liegen, werden bevorzugt mittels Elektroden und/oder mittels Brennern, insbesondere Luft/Gas- und/oder Sauerstoff/Gasbrennern beheizt.

In einer besonders bevorzugten Ausführung der Glasschmelzwanne ist der verengte Bereich der Läuterbereich. Die erfindungsgemäß erzielbare hohe Temperatur der Schmelze dient dabei im wesentlichen der genannten Unterstützung der Läuterung.

Dadurch, dass der Teil des Läuterungsbereichs, der oberhalb der Schmelze liegt, von der übrigen Wanne gasdicht abtrennbar ist, beispielsweise durch Trennwände, die zumindest zum Teil von oben in die Schmelze ragen, lässt sich der Läuterbereich, der oberhalb der Schmelze liegt, wenigstens teilweise evakuieren.

Die Anwendung von Vakuum unterstützt zusätzlich die Läuterung, wobei die niedrigen Drücke über der Schmelze ein schnelles Blasenwachstum ermöglicht und somit den Blasenaufstieg in der ohnehin schon niedrigviskosen Schmelze beschleunigen.

Die Geometrie des verengten Querschnittbereichs ist vorteilhaft so gestaltet, dass die Schmelze eine im Vergleich zu ihrem Volumen große Oberfläche aufweist, um das Austreiben von Blasen ebenfalls zu beschleunigen. Bevorzugt beträgt das Verhältnis Volumen zu Oberfläche der Schmelze im verengten Bereich etwa 1 m³ zu 4 m².

In einer vorteilhaften Ausgestaltung der Erfindung ragen die Elektroden von unten und/oder von den Seitenflächen der Glasschmelzwanne in die Schmelze, wobei die Elektroden auch in Form von Blockelektroden verwendet werden können. Gegebenenfalls werden die Elektroden gekühlt.

Prinzipiell sind alle vorbestimmten Elektroden verwendbar, wobei bevorzugt Elektroden verwendet werden, die aus Molybdän bestehen, da Molybdän relativ beständig, preiswert und gut bearbeitbar ist. Ebenfalls verwendet werden Elektroden aus Platin, wobei Platin korrosionsbeständiger gegen Glasschmelzen ist.

Die Spannung zwischen den Elektroden beträgt vorzugsweise bis zu 1500 V, insbesondere bis zu 1000 V, wobei der Strom bis zu 7000 A, insbesondere bis zu 5000 A beträgt.

Es sind prinzipiell alle elektrische Heizverfahren anwendbar, insbesondere Heizverfahren, bei denen an die Elektroden eine Wechselspannung mit einer Frequenz von bis zu 20 kHz angelegt wird.

Um an der Oberfläche der Glasschmelze schwimmendes, noch nicht vollständig gelöstes Gemenge vom verengten Querschnittsbereich fernzuhalten, kann eine Barriere (Durchflusswall) vor dem verengten Querschnittsbereich angebracht sein, unter der die Schmelze hindurchfließt.

Die Erfindung wird anhand der in den Zeichnungen gezeigten Ausführungsbeispielen näher erläutert.

Es zeigen:
- Fig. 1: eine schematische Darstellung einer bevorzugten Ausführungsform einer Glasschmelzwanne in Aufsicht,
- Fig. 2: eine Seitenansicht gemäß Fig. 1, jedoch mit veränderter Heizelektrodenanordnung,
- Fig. 3: eine Seitenansicht einer weiteren Ausführungsform einer Glasschmelzwanne.
- Fig. 4: eine Aufsicht einer weiteren Ausführungsform einer Glasschmelzwanne.

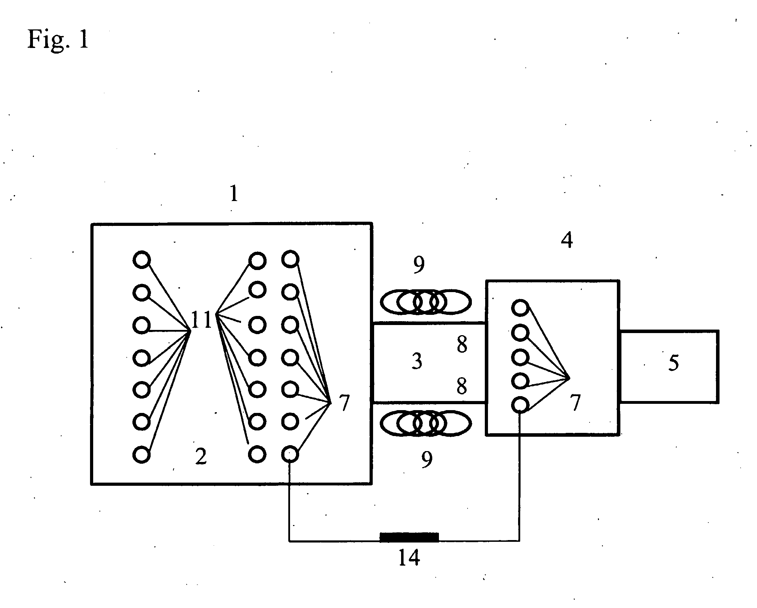

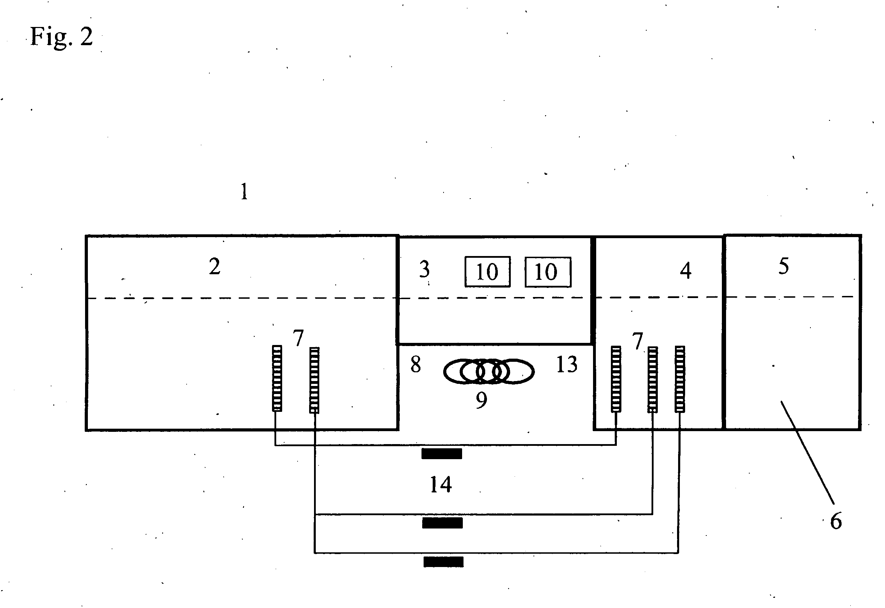

Figur 1 ist eine schematische Darstellung einer bevorzugten Ausführungsform einer Glasschmelzwanne 1 in Aufsicht. In Figur 2 ist die entsprechende Glasschmelzwanne 1 in Seitenansicht dargestellt, jedoch sind die Elektroden abweichend angeordnet.

Die Glasschmelzwanne 1 ist im wesentlichen in vier Bereiche aufgeteilt. So weist die Wanne 1 einen Einschmelzbereich 2, einen verengten Querschnittsbereich 3, einen Abstehbereich 4 und eine Rinne 5 zum Ableiten der Glasschmelze 6, beispielsweise zur Weiterverarbeitung, auf, wobei die Wanne in der Regel durch ein Gewölbe nach oben überdeckt ist.

Heizelektroden 7 aus Molybdän, die von unten durch den Wannenboden in die Schmelze 6 eingeführt sind, sind eingezeichnet. Die Heizelektroden sind über einen Transformator 14 geschaltet.

Jeweils sieben Heizelektroden 7 sind im Einschmelzbereich 2 vor dem verengten Querschnittsbereich 3 und jeweils fünf Heizelektroden 7 sind im Abstehbereich 4 hinter dem verengten Querschnittsbereich angeordnet.

In Figur 2 sind die Heizelektroden 7 etwas versetzt angeordnet, wobei die Elektroden im Einschmelzbereich 2 in zwei Reihen und im Abstehbereich 4 in drei Reihen angeordnet sind. Über Transformatoren 14 sind die Elektroden geschaltet.

Der verengte Querschnittsbereich 3 ist symmetrisch ausgebildet und wird durch eine Einwölbung 8 von zwei gegenüberliegenden Seitenwänden sowie durch eine Einwölbung 8 des Wannenbodens ausgebildet.

Durch den verengten Querschnittsbereich 3 wird die Stromdichte zwischen den Heizelektroden im verengten Bereich erhöht und somit getrennt vom Ort der Elektroden eine Erhöhung der Temperatur der Schmelze 6 erreicht.

Die Größe und Geometrie der Querschnittsverengung haben einen wesentlichen Einfluss auf die erreichbare Erhöhung der Stromdichte und damit verbundene Erhöhung der Temperatur der Schmelze im verengten Bereich.

Bei einer Glasschmelzwanne 1 mit bestimmter Größe und Geometrie des verengten Bereichs 3 lässt sich die Temperatur der Schmelze im wesentlichen über den Stromfluss durch die Elektroden 7 einstellen und regeln, wobei insbesondere die Heizspannung und der Heizstrom bzw. die Leistung einstell- und regelbar sind.

Des weiteren wurden einfache Modellrechnungen durchgeführt, um den zu erwartenden Energieverbrauch zum Aufheizen einer 1600 °C heißen Glasschmelze auf 2000 °C im verengten Querschnittsbereich zu ermitteln. Der Energieverbrauch wurde für verschiedene Geometrien des verengten Querschnittsbereichs einer in Figur 1 bzw. 2 schematisch dargestellten Glasschmelzwanne berechnet.

Die Ergebnisse dieser Modellrechnungen sind im folgenden wiedergegeben. Die Berechnungen wurden für folgende Vorgaben durchgeführt:
- Breite von Einschmelz- und Abstehbereich 400 cm
- Höhe der Schmelze im Einschmelz- und Abstehbereich 100 cm
- Abstand der Stabelektroden vor und hinter dem verengten Querschnittsbereich 150 cm
- Seitenabstand der Stabelektroden 30 cm
- Durchmesser der Stabelektroden 50 mm
- Volumen der Schmelze im verengten Bereich 600 000 cm³
- Heizleistung um Glasschmelze von 1600 °C auf 2000 °C im verengten Bereich aufzuheizen 500 KW
- Spezifischer Widerstand der 1600 °C heißen Glasschmelze im Einschmelz- und Abstehbereich 3,0 Ω cm
- Wandverluste im Einschmelz- und Abstehbereich keine
- Spezifischer Widerstand der 2000 °C heißen Glasschmelze im verengten Bereich 1,7 Ω cm
- Wandverluste im verengten Bereich 60 W/cm²

Bei den Modellrechnungen wurde die Geometrie des verengten Bereichs (Länge x Höhe x Breite), wobei das Volumen der Schmelze bei 600000 cm³ festgehalten wurde, variiert und so die jeweilige Heizleistung (Energieverbrauch) bestimmt. So ergab sich beispielsweise für eine erfindungsgemäße Glasschmelzwanne 1 unter den oben genannten Annahmen mit einem verengten Querschnittsbereich 3 der ein Schmelzvolumen (Höhe x Breite x Länge) von 50 cm x 40 cm x 300 cm aufweist, ein Heizstrom von 4551 A, eine Heizspannung von 845 V und eine relativ geringe Gesamtheizleistung von 3,85 MW, wobei sich die Heizleistung auf 233 kW vor der Verengung, 3,38 MW im Bereich der Verengung und 233 kW hinter der Verengung bei einem Widerstand der Schmelze von jeweils 0,0113 O, 0,1632 O und 0,0113 O aufteilt.

Um eine Glasschmelze mit demselben Volumen in einer Wanne mit einem verengten Bereich der die Maße 15 cm x 90 cm x 444 cm aufweist, ebenfalls von 1600 °C auf 2000 °C zu erhitzen, werden insgesamt 6,35 MW Heizleistung benötigt.

Durch Reduktion des Volumens der Schmelze im verengten Bereich kann eine deutliche Reduktion der einzubringenden Leistung erzielt werden.

Die Modellrechnungen zeigen eindeutig, dass Größe und Geometrie des verengten Bereichs einen großen Einfluss auf die aufzubringende Heizleistung haben.

Die dargestellte Glasschmelzwanne 1 zeigt des weiteren eine Wasserkühlung 9 der Wandung im Bereich der Verengung 3. Durch die Kühlung der Wandung wird die Wannenkorrosion in dem Bereich, in dem die Schmelze sehr heiß ist, vermindert. Die an der Wandung abgekühlte Schmelze schützt gleichzeitig die Wandung vor der sehr heißen Schmelze im Innern des verengten Bereichs.

Brenner 10, insbesondere Luft/Glas- und/oder Sauerstoff/Gas-Brenner, ermöglichen eine zusätzliche Beheizung der Schmelze. Dies ist besonders vorteilhaft, wenn der verengte Bereich 3 der Läuterungsbereich ist. Die beim Läutern bevorzugte große Oberfläche der Schmelze im Verhältnis zu ihrem Volumen bringt große Wärmeverluste und damit besonders ein Abkühlen der Schmelze an deren Oberfläche mit sich. Durch die zusätzliche Brennerbeheizung wird der Oberflächenabkühlung entgegengewirkt und so das Läutern positiv unterstützt.

Im Einschmelzbereich sind sechs Paare von Heizelektroden 11 aus Molybdän, die von unten in die Schmelze 6 ragen, eingezeichnet. In diesem Bereich erfolgt eine direkte elektrische Beheizung der Schmelze auf bislang übliche Temperaturen.

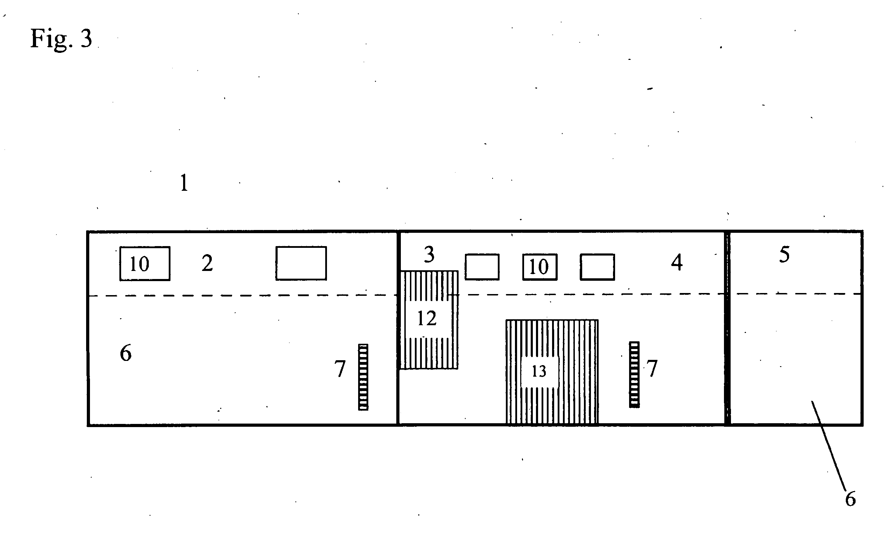

Figur 3 zeigt eine weitere Ausführungsform der Erfindung. Der verengte Querschnittsbereich 3 zwischen den Heizelektrodenpaaren 7 wird durch die Abfolge von einem Durchflusswall 12 und einem Bodenwall 13 gebildet. Der Durchflusswall 12 reicht von einer Seitenwand der Wanne zur gegenüberliegenden Wand und trennt die Schmelze in ihrem oberen Bereich vollständig vom dahinterliegenden Bereich ab, wobei die Schmelze nur zwischen der Unterseite des Durchflusswalls 12 und dem Wannenboden geführt werden kann. In einigem Abstand zum Durchflusswall 12 folgt der ebenfalls von der Seitenwand bis zur gegenüberliegenden Wand der Wanne reichende Bodenwall 13, der vom Wannenboden bis nahe an die Oberfläche der Schmelze 6 reicht. Brenner 10 ermöglichen eine zusätzliche Beheizung der Schmelze 6 im verengten Bereich 3, sowie eine alleinige Beheizung im Einschmelzbereich 2.

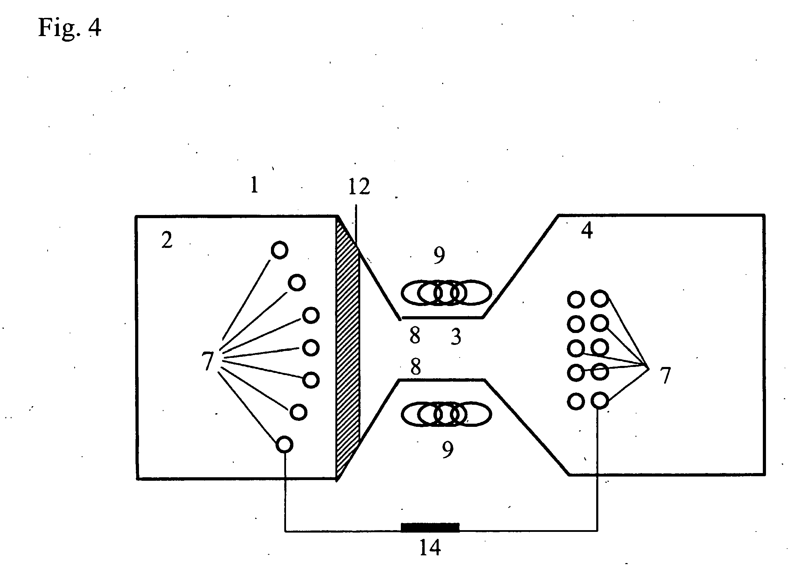

Die in Figur 4 in Aufsicht dargestellte Glasschmelzwanne 1 weist ebenfalls einen bezüglich der Längsachse der Wanne symmetrisch verengten Querschnittsbereich 3 auf. Der verengte Querschnittsbereich 3 wird durch eine Einwölbung 8 von zwei gegenüberliegenden Seitenwänden sowie durch eine Einwölbung des Wannenbodens ausgebildet. Die Seitenwände sind jedoch im Gegensatz zum in Figur 1 und 2 dargestellten Ausführungsbeispiel im Übergangsbereich zur Verengung schräg ausgebildet. Zwischen den Heizelektroden 7 im Einschmelzbereich 2 und dem verengten Querschnittsbereich 3 ist eine Durchflusswall 12 angeordnet. Dadurch, dass der Wall 12 nicht direkt im verengten Bereich liegt, ist dessen Kühlung nicht unbedingt notwenig. Die Heizelektroden 7 sind im Einschmelzbereich 2 auf einem Kreissegment und im Abstehbereich 4 in zwei Reihen angeordnet und über einen Transformator 14 geschaltet. Im Bereich der höchsten Stromdichte, und somit der höchsten Temperatur der Glasschmelze wird die Glasschmelzwanne 1 mittels einer Kühlung 9 gekühlt.

Das erfindungsgemäße Verfahren zum Schmelzen von Glas lässt sich einfach und mit niedrigen Investitionskosten durch geringfügige Modifikationen bestehender Wannen und Verfahren realisieren. Die Schmelze lässt sich auf sehr hohe Temperaturen erhitzen, ohne dass die Heizelektroden direkt diesen Temperaturen ausgesetzt sind, wodurch die Elektrodenkorrosion gering gehalten wird. Durch Kühlung der Wanne im Bereich der hohen Temperaturen der Schmelze wird die Wannenkorrosion ebenfalls effektiv minimiert. Die erreichbaren hohen Temperaturen und die damit verbundene Verringerung der Viskosität der Schmelze unterstützen die Läuterung der Glasschmelze in außerordentlicher Weise.

### BEZUGSZEICHENLISTE

- 1: Glasschmelzwanne
- 2: Einschmelzbereich
- 3: Bereich mit verengtem Querschnitt
- 4: Abstehbereich
- 5: Rinne
- 6: Schmelze
- 7: Heizelektroden vor und hinter verengtem Querschnittsbereich
- 8: Einwölbung
- 9: Kühlung
- 10: Brenner
- 11: Heizelektroden im Einschmelzbereich
- 12: Durchflusswall
- 13: Bodenwall
- 14: Transformator

## Patentansprüche

1. Verfahren zum Schmelzen von Glas,
wobei die Schmelze in eine Glasschmelzwanne (1) mit einem wenigstens im Bereich der Schmelze verengten Querschnittsbereich (3) geleitet wird, die Schmelze im verengten Querschnittsbereich (3) durch mindestens eine Heizelektrode (7) vor und eine entsprechende Gegenheizelektrode (7) hinter dem verengten Querschnittsbereich (3) beheizt wird,
und im verengten Querschnittsbereich (3) eine Zone mit einer Temperatur der Schmelze gebildet wird, die höher ist, als die Temperaturen in den Bereichen der Heizelektrode (7) und der Gegenelektrode (7), und die zum Läutern der Glasschmelze geeignet ist.

2. Verfahren nach Anspruch 1,
**dadurch gekennzeichnet,**
**dass** die Temperatur der Schmelze im verengten Querschnittsbereich (3) im wesentlichen über den Stromfluss durch die Elektroden (7) eingestellt und geregelt wird.

3. Verfahren nach Anspruch 1 oder 2,
**dadurch gekennzeichnet,**
**dass** der verengte Querschnittsbereich (3) durch eine Einwölbung (8) einer Seitenfläche oder durch eine Einwölbung (8) von zwei gegenüberliegenden Seitenflächen der Glasschmelzwanne (1) gebildet wird.

4. Verfahren nach Anspruch 3,
**dadurch gekennzeichnet,**
**dass** der verengte Querschnittsbereich (3) durch eine symmetrische Einwölbung (8) von zwei gegenüberliegenden Seitenflächen der Glasschmelzwanne (1) gebildet wird.

5. Verfahren nach wenigstens einem der Ansprüche 1 bis 4,
**dadurch gekennzeichnet,**
**dass** der verengte Querschnittsbereich (3) durch eine Einwölbung (8) der Bodenfläche der Glasschmelzwanne (1) gebildet wird:

6. Verfahren nach wenigstens einem der Ansprüche 1 bis 5,
**dadurch gekennzeichnet,**
**dass** die Länge des verengten Querschnittsbereichs (3) über eine Gesamtlänge von bis zu 15 % der Glasschmelzwanne (1) ausgebildet wird.

7. Verfahren nach wenigstens einem der Ansprüche 1 bis 6,
**dadurch gekennzeichnet,**
**dass** der verengte Querschnittsbereich (3) so ausgebildet wird, dass dessen Länge 150 bis 460 cm, dessen Breite 40 bis 150 cm und dessen Tiefe 10 bis 60 cm beträgt.

8. Verfahren nach wenigstens einem der Ansprüche 1 bis 7,
**dadurch gekennzeichnet,**
**dass** die Wandung der Glasschmelzwanne (1) wenigstens im verengten Querschnittsbereich (3) gekühlt, insbesondere wassergekühlt wird, wobei die Schmelze im Randbereich eine erniedrigte Temperatur aufweist.

9. Verfahren nach wenigstens einen der Ansprüche 1 bis 8,
**dadurch gekennzeichnet,**
**dass** die Schmelze (6) im verengten Querschnittsbereich (3) zusätzlich beheizt, insbesondere luft/gasbeheizt und/oder sauerstoff/gasbeheizt wird.

10. Verfahren nach wenigstens einen der Ansprüche 1 bis 9,
**dadurch gekennzeichnet,**
**dass** die Schmelze (6) in den Bereichen, die vor und/oder hinter dem verengten Querschnittsbereich (3) liegen, beheizt, insbesondere elektrisch und/oder luft/ gas- und oder sauerstoff/gasbeheizt wird.

11. Verfahren nach wenigstens einen der Ansprüche 1 bis 10,
**dadurch gekennzeichnet,**
**dass** die Glasschmelze (6) im verengten Querschnittsbereich (3) vakuumgeläutert wird.

12. Verfahren nach wenigstens einem der Ansprüche 1 bis 11,
**dadurch gekennzeichnet,**
**dass** im verengten Querschnittsbereich (3) wenigstens im Bereich der Schmelze (6) eine zum Volumen der Schmelze (6) große Oberfläche der Schmelze (6) gebildet wird.

13. Verfahren nach wenigstens einen der Ansprüche 1 bis 12,
**dadurch gekennzeichnet,**
**dass** die Schmelze (6) durch Elektroden (7), die von unten und/oder die von den Seitenflächen in die Schmelze ragen, beheizt wird.

14. Verfahren nach Anspruch 13,
**dadurch gekennzeichnet,**
**dass** Elektroden (7) aus Molybdän oder Platin verwendet werden.

## Claims

1. Method for melting glass, wherein the melt is directed into a glass-melting tank (1) with a constricted cross-sectional region (3) at least in the region of the melt, the melt is heated in the constricted cross-sectional region (3) by at least one heating electrode (7) in front of the constricted cross-sectional region (3) and a corresponding counter heating electrode (7) behind the constricted cross-sectional region (3), and a zone with a temperature of the melt which is higher than the temperatures in the regions of the heating electrode (7) and the counter electrode (7) and is suitable for refining the glass melt is formed in the constricted cross-sectional region (3).

2. Method according to Claim 1, **characterized in that** the temperature of the melt in the constricted cross-sectional region (3) is set and controlled substantially by means of the current flow through the electrodes (7).

3. Method according to Claim 1 or 2, **characterized in that** the constricted cross-sectional region (3) is formed by a concave curvature (8) of a side surface or by a concave curvature (8) of two opposing side surfaces of the glass-melting tank (1).

4. Method according to Claim 3, **characterized in that** the constricted cross-sectional region (3) is formed by a symmetrical concave curvature (8) of two opposing side surfaces of the glass-melting tank (1).

5. Method according to at least one of Claims 1 to 4, **characterized in that** the constricted cross-sectional region (3) is formed by a concave curvature (8) of the bottom surface of the glass-melting tank (1).

6. Method according to at least one of Claims 1 to 5, **characterized in that** the length of the constricted cross-sectional region (3) is formed over a total length of up to 15% of the glass-melting tank (1).

7. Method according to at least one of Claims 1 to 6, **characterized in that** the constricted cross-sectional region (3) is formed such that its length is 150 to 460 cm, its width is 40 to 150 cm and its depth is 10 to 60 cm.

8. Method according to at least one of Claims 1 to 7, **characterized in that** the wall of the glass-melting tank (1) is cooled, in particular water-cooled, at least in the constricted cross-sectional region (3), the melt having a lower temperature in the peripheral region.

9. Method according to at least one of Claims 1 to 8, **characterized in that** the melt (6) in the constricted cross-sectional region (3) is additionally heated, in particular air/gas-heated and/or oxygen/gas-heated.

10. Method according to at least one of Claims 1 to 9, **characterized in that** the melt (6) in the regions that lie in front of and/or behind the constricted cross-sectional region (3) is heated, in particular electrically and/or air/gas- and/or oxygen/gas-heated.

11. Method according to at least one of Claims 1 to 10, **characterized in that** the glass melt (6) in the constricted cross-sectional region (3) is vacuum-refined.

12. Method according to at least one of Claims 1 to 11, **characterized in that** a surface of the melt (6) that is great in relation to the volume of the melt (6) is formed in the constricted cross-sectional region (3), at least in the region of the melt (6).

13. Method according to at least one of Claims 1 to 12, **characterized in that** the melt (6) is heated by electrodes (7), which protrude into the melt from below and/or from the side surfaces.

14. Method according to Claim 13, **characterized in that** electrodes (7) made of molybdenum or platinum are used.

## Revendications

1. Procédé de fusion de verre, dans lequel le bain de fusion est placé dans une cuve (1) de fusion de verre qui présente au moins une partie (3) de section transversale rétrécie dans la zone occupée par la matière fondue, la matière fondue présente dans la partie rétrécie (3) de la section transversale étant chauffée par au moins une électrode de chauffage (7) située en amont et une contre-électrode de chauffage (7) correspondante située en aval de la partie (3) de section transversale rétrécie,
une zone où la température de la matière fondue est supérieure à la température dans les zones de l'électrode de chauffage (7) et de la contre-électrode de chauffage (7) étant formée dans la partie (3) à section transversale rétrécie.

2. Procédé selon la revendication 1, **caractérisé en ce que** la température de la matière fondue dans la zone (3) à section transversale rétrécie est établie et régulée essentiellement par l'apport de courant dans les électrodes (7).

3. Procédé selon les revendications 1 ou 2, **caractérisé en ce que** la partie (3) à section transversale rétrécie est formée par un bombage (8) d'une surface latérale ou par un bombage (8) de deux surfaces latérales opposées de la cuve (1) de fusion de verre.

4. Procédé selon la revendication 3, **caractérisé en ce que** la partie (3) à section transversale rétrécie est formée par un bombage symétrique (8) de deux surfaces latérales opposées de la cuve (1) de fusion de verre.

5. Procédé selon au moins l'une des revendications 1 à 4, **caractérisé en ce que** la partie (3) à section transversale rétrécie est formée par un bombage (8) de la surface du fond de la cuve (1) de fusion de verre.

6. Procédé selon au moins l'une des revendications 1 à 5, **caractérisé en ce que** la longueur de la partie (3) à section transversale rétrécie est formée sur une longueur totale qui représente jusque 15 % de celle de la cuve (1) de fusion de verre.

7. Procédé selon au moins l'une des revendications 1 à 6, **caractérisé en ce que** la partie (3) à section transversale rétrécie est configurée de telle sorte que sa longueur soit de 150 à 460 cm, sa largeur de 40 à 150 cm et sa profondeur de 10 à 60 cm.

8. Procédé selon au moins l'une des revendications 1 à 7, **caractérisé en ce que** dans la partie (3) à section transversale rétrécie, la paroi de la cuve (1) de fusion de verre est refroidie et en particulier refroidie par eau, la matière fondue présentant dans la bordure une température plus basse.

9. Procédé selon au moins l'une des revendications 1 à 8, **caractérisé en ce que** dans la partie (3) à section transversale rétrécie, la matière fondue (6) est chauffée en supplément, en particulier chauffée à l'air et au gaz et/ou chauffée à l'oxygène et au gaz.

10. Procédé selon au moins l'une des revendications 1 à 9, **caractérisé en ce que** dans les zones situées en amont et/ou en aval de la partie (3) à section transversale rétrécie, la matière fondue (6) est chauffée, en particulier électriquement et/ou à l'aide d'air et de gaz et/ou à l'aide d'oxygène et de gaz.

11. Procédé selon au moins l'une des revendications 1 à 10, **caractérisé en ce que** le verre fondu (6) est affiné sous vide dans la partie (3) à section transversale rétrécie.

12. Procédé selon au moins l'une des revendications 1 à 11, **caractérisé en ce qu'**au moins dans la zone de la partie (3) à section transversale rétrécie occupée par la matière fondue (6), on forme une surface de la matière fondue (6) qui est grande par rapport au volume de la matière fondue (6).

13. Procédé selon au moins l'une des revendications 1 à 12, **caractérisé en ce que** la matière fondue (6) est chauffée par des électrodes (7) qui pénètrent dans la matière fondue par le bas et/ou par les surfaces latérales.

14. Procédé selon la revendication 13, **caractérisé en ce que** l'on utilise des électrodes (7) en molybdène ou en platine.
